# EUROPÄISCHE PATENTSCHRIFT

(11) **EP 4 402 384 B1**
(45) Veröffentlichungstag und Bekanntmachung des Hinweises auf die Patenterteilung: **02.07.2025**
(21) Anmeldenummer: 22772491.1
(22) Anmeldetag: 01.09.2022
(51) Int. Cl.: F16B 13/06

(54) **SPREIZDÜBEL**
EXPANSION ANCHOR
CHEVILLE À EXPANSION

(30) Priorität: 14.09.2021 DE 102021123739; 17.08.2022 DE 102022120712
(43) Veröffentlichungstag der Anmeldung: 24.07.2024
(73) Patentinhaber: fischerwerke GmbH & Co. KG, 72178 Waldachtal (DE)
(72) Erfinder: FREY, Christian, 72250 Freudenstadt-Wittlensweiler (DE); GANSZKI, Timo, 72178 Waldachtal (DE)
(86) Internationale Anmeldenummer: PCT/EP2022/074280
(87) Internationale Veröffentlichungsnummer: WO 2023/041332

(56) Entgegenhaltungen:
- EP-B1- 3 477 126
- DE-A1- 2 213 711
- DE-U- 7 020 132

## Beschreibung

Die Erfindung betrifft einen Spreizdübel mit den Merkmalen des Anspruchs 1. Spreizdübel, die nicht gänzlich aus einem Kunststoff oder aus einem Metall bestehen, sind bekannt. So beschreibt beispielsweise die europäische Patentschrift EP 3 477 126 B1 einen Spreizdübel, der sowohl aus einem Kunststoff als auch aus einem Metall besteht. Der Spreizdübel gemäß der Patentschrift besteht aus einer äußeren Hülse und aus einem innenliegenden Kern. Die Hülse weist Spreizzungen auf, die durch sich in Längsrichtung des Spreizdübels erstreckende Schlitze voneinander getrennt sind. Im Inneren der Hülse ist der Kern angeordnet. Teile des Kerns sind in den Schlitzen der Hülse angeordnet und treten durch diese hindurch. Ein Spreizkonus ist an einem vorderen Ende des Spreizdübels angeordnet. Durch Einschrauben einer Schraube in den Kern wird der Spreizkonus in Richtung eines hinteren Endes des Spreizdübels gezogen. Hierbei spreizt die Hülse nach außen, wodurch der Spreizdübel in einem Bohrloch im Verankerungsgrund befestigt wird. Der Kern wird hierbei derart komprimiert, dass, abhängig von der Ausgestaltung des Bohrlochs, die Teile des Kerns, die in den Schlitzen angeordnet sind, wulstartig aus diesen hervortreten. Ein Einsatz des Spreizdübels beispielsweise in Hohllochziegeln sorgt dafür, dass der Kern in die Ausnehmungen des Hohllochziegels gedrückt wird, respektive "fließt", und dadurch eine formschlüssige Verbindung ausgebildet wird. Ein derartiger Spreizdübel wird beispielsweise auch zur Verankerung in einem Bohrloch in einer Gipskartonplatte eingesetzt, wobei in diesem Fall der Kern auf einer Seite der Gipskartonplatte aus dem Bohrloch hervorsteht und das Bohrloch übergreift.

Aufgabe der Erfindung ist es, einen alternativen Spreizdübel vorzuschlagen, welcher eine stabile und zuverlässige Verankerung insbesondere in Gipskartonplatten gewährleistet.

Diese Aufgabe wird erfindungsgemäß durch die Merkmale des Anspruchs 1 gelöst. Die Erfindung schlägt einen Spreizdübel vor, der sich entlang einer Längsachse zwischen einem vorderen und einem hinteren Ende des Spreizdübels erstreckt. Der Spreizdübel weist einen in Längsrichtung axial komprimierbaren Kern auf. Der Kern ist insbesondere aus einem Kunststoff mittels Spritzguss hergestellt, insbesondere aus Polyamid (PA), bevorzugt aus Polycaprolactam (PA6) oder Polypropylen (PP). Auch andere Kunststoffe und generell andere für den Verwendungszweck geeignete Materialien sind möglich. Der Kern umfasst einen Schraubkanal zum Einführen einer Schraube, insbesondere einer metrischen Schraube. Der Schraubkanal erstreckt sich entlang der Längsachse. Am hinteren Ende des Spreizdübels weist der Kern eine Öffnung auf, durch welche die Schraube in den Schraubkanal eingebracht, genauer formuliert eingesteckt oder eingeschraubt werden kann. Anders formuliert ist der Schraubkanal am hinteren Ende offen. Durch den Schraubkanal weist der Kern zumindest in Teilen eine hohlzylindrische Gestalt auf. Insbesondere durchdringt der Schraubkanal den Kern vollständig in Längsrichtung.

Eine äußere Hülse ist um den Kern herum angeordnet. Die Hülse besteht insbesondere aus Metall und ist hierbei bevorzugt ein Blechteil, besonders bevorzugt ein Blechbiegeteil. Die Hülse kann jedoch auch aus einem Kunststoff gefertigt sein, beispielsweise durch Spritzgießen. Sind sowohl der Kern als auch die Hülse aus einem Kunststoff gefertigt, weist insbesondere der Kunststoff der Hülse einen höhere Festigkeit auf als der Kunststoff des Kerns. Unter "Hülse" ist keine vollflächig geschlossene idealisierte Hülse zu verstehen. "Hülse" meint lediglich eine im Wesentlichen hohlrunde Gestalt, die sich entlang der Längsachse erstreckt und insbesondere drehsymmetrisch bezüglich der Längsachse ist. Insbesondere ummantelt die Hülse den Kern. Hierunter ist zu verstehen, dass ein Innenumfang der Hülse insbesondere flächig, nach Art einer Passung, an einem Außenumfang des Kerns anliegt. Der Kern und die Hülse sind insbesondere derart aufeinander abgestimmt, dass die Hülse in Richtung der Längsachse auf den Kern aufgesteckt werden kann.

Die Hülse weist in einem Knickbereich sich insbesondere in Längsrichtung erstreckende Knickarme auf, die von sich insbesondere in Längsrichtung erstreckenden Durchbrechungen in der Hülse getrennt sind. Insbesondere weist die Hülse eine Vielzahl von Knickarmen und Durchbrechungen auf. Insbesondere ist die Anzahl der Knickarme und der Durchbrechungen identisch. Insbesondere weisen die Knickarme und die Durchbrechungen insbesondere in Längsrichtung identische Längen auf, wobei die Knickarme und die Durchbrechungen insbesondere an einer gemeinsamen Position auf der Hülse beginnen, sich identisch weit in Längsrichtung entlang der Hülse erstrecken, und an einer weiteren gemeinsamen Position enden. Eine Erstreckung der Knickarme und der Durchbrechungen in Längsrichtung ist bevorzugt, aber nicht zwingend. Die Erstreckung sowohl der Durchbrechungen als auch der Knickarme kann auch unter einem Winkel zur Längsachse, also "schräg" zu dieser erfolgen. Durch die Länge der Knickarme und der Durchbrechungen ist der Knickbereich definiert.

Ein Widerlagerelement zum Eindrehen einer Schraube ist am vorderen Ende des Spreizdübels angeordnet. Das Widerlagerelement ist insbesondere eine hohlzylindrische Buchse, wobei die Buchse insbesondere einen Einsteckbereich aufweist, mittels welchem die Buchse zumindest teilweise in Längsrichtung in die Hülse eingesteckt ist. Ein Außenumfang der Buchse im Einsteckbereich ist hierbei insbesondere identisch mit dem Außenumfang des Kerns. Insbesondere liegt, wenn der Kern und das Widerlagerelement in der Hülse angeordnet sind, ein vorderes Ende des Kerns an einem hinteren Ende des Widerlagerelements an. Das Widerlagerelement weist insbesondere eine sich in Längsrichtung erstreckende Durchgangsöffnung auf, deren radialer Durchmesser kleiner oder gleich dem Durchmesser des Schraubkanals ist. Das Widerlagerelement ist insbesondere aus einem widerstandsfähigen Kunststoff, insbesondere aus dem speziellen Polyamid PA6 GF50, auch bekannt unter "Akromid", durch Spritzgießen gefertigt. Auch ein Einsatz des Kunststoffs Polyoxymethylene (POM) ist möglich. Die Aufzählung ist beispielhaft und nicht abschließend. Das Widerlagerelement kann jedoch auch aus Metall bestehen. Beispielsweise kann eine Mutter an ein vorderes Ende der Blechhülse angeschweißt sein. Das Widerlagerelement kann zudem auch einstückig mit der Blechhülse, beispielsweise durch Abkanten des Blechs, ausgebildet sein.

Durch Eindrehen einer in den Schraubkanal eingeführten Schraube in das Widerlagerelement ist das Widerlagerelement in Richtung des hinteren Endes des Spreizdübels axial bewegbar. Hierbei kann die Schraube derart gestaltet sein, dass die Schraube beim Eindrehen in das Widerlagerelement sich selbst eine Öffnung und somit ein Gewinde "furcht". Dies wäre beispielsweise bei Holzschrauben möglich. Bevorzugt ist jedoch, dass, wie bereits geschrieben, das Widerlagerelement zumindest eine Durchgangsöffnung aufweist, in welche die Schraube eindrehbar ist. Hierbei würde dann die Schraube das Gewinde in die vorgefertigte Durchgangsöffnung furchen. Besonders bevorzugt ist jedoch, dass bereits ein Gewinde, insbesondere ein sich in Längsrichtung erstreckendes Innengewinde, im Widerlagerelement vorgefertigt ist, in das die Schraube eingreift. Hierbei handelt es sich insbesondere um ein metrisches Innengewinde und bei der einzuschraubenden Schraube entsprechend um eine korrespondierende metrische Schraube. Durch die bevorzugte Verwendung des speziellen Polyamids weist hierbei das Innengewinde eine ausreichend hohe Festigkeit auf.

Durch die Bewegung des Widerlagerelements in Richtung des hinteren Endes des Spreizdübels wird der Kern derart komprimiert, dass der Kern zumindest punktuell im Knickbereich an einer oder mehreren Stellen radial bezüglich der Längsachse von innen gegen die Knickarme drückt, wodurch ein definiertes kniehebelartiges Ausknicken der Knickarme initiiert wird. Unter einem "kniehebelartigen Ausknicken" ist zu verstehen, dass die Knickarme beim Ausknicken Knickpunkte bilden. Anders formuliert bilden die Knickarme nach dem Ausknicken Kniehebel. Die Metallhülse kann im kompletten Knickbereich oder lediglich in einem Teilbereich ausknicken. Somit passt der erfindungsgemäße Spreizdübel sein Knickverhalten an die Dicke des verwendeten Befestigungsgrunds, beispielsweise an die Dicke der verwendeten Gipskartonplatte, an, wie dies im Folgenden beispielhaft erklärt wird:
Wäre die Gipskartonplatte derart dick, dass sich der komplette Knickbereich innerhalb der Bohrung in der Gipskartonplatte befinden würde, wäre ein Ausknicken gänzlich unterbunden. Der Kern würde die Knickarme nur punktuell gegen die Bohrlochinnenwandung drücken, was zu einem gleichmäßigen radialen Aufweiten der Hülse und zu einem Reibschluss im Bohrloch führt. Der bestimmungsgemäße Einsatz des erfindungsgemäßen Spreizdübels ist jedoch derart, dass nach dem Einsetzen des Dübels in den Befestigungsgrund, also insbesondere in die Gipskartonplatte, zumindest ein Teil des Knickbereichs, der sich vom vorderen Ende in Richtung des hinteren Endes des Spreizdübels erstreckt, "frei" bleibt, also sich nicht im Bohrloch befindet, sondern nach hinten über die Gipskartonplatte übersteht. Aufgrund des punktuellen Drucks des Kerns gegen die Hülse in dem freien Bereich des Knickbereichs sind die Knickarme somit in der Lage nach außen auszuknicken. Anders formuliert "wölben" sich die Knickarme mit zunehmender Bewegung des Widerlagerelements immer stärker, und die jeweiligen Knickpunkte der Knickarme bewegen sich folglich immer weiter radial von der Längsachse weg. Die Bildung der einzelnen Knickpunkte ist von der Position abhängig, an welcher der Kern punktuell gegen die Knickarme drückt. Zu Beginn des kniehebelartigen Ausknickens ist der Kern punktuell mit den Knickarmen in Kontakt und es bilden sich die Knickpunkte in den einzelnen Knickarmen. Mit zunehmendem Ausknicken der Knickarme geht der punktuelle Kontakt zwischen den Knickpunkten und dem Kern verloren und ein radialer Abstand bezüglich der Längsachse zwischen den Knickpunkten und dem Kern wird größer.

Dieser Vorgang ist insbesondere dann beendet, wenn die ausgeknickten Knickarme an einer Seite der Gipskartonplatte anliegen. Der Kern bleibt stets innerhalb der Hülse und tritt folglich nicht aus dieser hervor.

Bevorzugt weisen die Knickarme keine "Sollknickstellen" auf, also keine Stellen, an denen durch eine Schwächung der Knickarme die Bildung der Knickpunkte und somit ein kniehebelartiges Ausknicken der Knickarme begünstigt wird.

Vorteilhafterweise vergrößert sich der Durchmesser des Kerns, ausgehend von dem unkomprimierten Zustand, wenn also der Kern noch nicht durch das Widerlagerelement komprimiert ist, um weniger als 40%, wenn der Kern einen maximal komprimierten Zustand erreicht hat. Bevorzugt vergrößert sich der Durchmesser um weniger als 30% und besonders bevorzugt um weniger als 25%. Hierdurch ist das kniehebelartige Ausknicken der Knickarme begünstigt, der Kern bildet bei ausreichend ausgeknickten Knickarmen einen axial steifen Körper und der Benutzer erhält durch das Ansteigen des Drehmoments eine Rückmeldung über den Abschluss des Setzvorgangs.

Insbesondere ist der Kern derart gestaltet, dass sich die entstehenden Knickpunkte der einzelnen Knickarme in Längsrichtung auf einer zumindest annähernd gleichen Position befinden. Dadurch wird im Optimalfall ein identisches Ausknicken jedes einzelnen Knickarms bewirkt.

Der Kern wirkt also lediglich als Initiator für das Ausknicken und trägt selbst nicht oder nur untergeordnet zu der eigentlichen Befestigung, respektive der Stärke der Befestigung, also der Last, die der Spreizdübel aufnehmen kann, bei. Durch das verbesserte, "intelligente" Ausknickverhalten des Spreizdübels können, wie erwähnt, in der Hülse und im Kern vorgefertigte "Sollknickstellen" entfallen, wie sie beispielsweise in der europäischen Patentschrift EP 3 477 126 B1 dargestellt sind. Ist die Hülse aus Metall hergestellt, kann der erfindungsgemäße Spreizdübel auch im Brandfall zumindest für eine kurze Zeit seine Funktionsfähigkeit behalten, da die Last im Wesentlichen gänzlich über die ausgeknickten Knickarme aus Metall abgetragen wird und nicht wie in der erwähnten Patentschrift durch den gebildeten Wulst aus Kunststoff. Voraussetzung für eine zumindest bedingte Tauglichkeit im Brandfall ist jedoch ein Widerlagerelement aus einem feuerfesten oder zumindest feuerresistenten Material, wie beispielsweise Metall.

In einer vorteilhaften Ausgestaltung der Erfindung sind der Kern, die Hülse und das Widerlagerelement zueinander drehfest. Insbesondere weist der Kern am hinteren Ende des Spreizdübels einen Bund auf, mit welchem die Hülse verbunden ist. Am vorderen Ende des Spreizdübels ist die Hülse mit dem Widerlagerelement verbunden. Somit ist die Hülse also zwischen dem Kern, respektive dem Bund des Kerns, und dem Widerlagerelement angeordnet. Über die Hülse werden der Kern und das Widerlagerelement zueinander drehfest gehalten. Durch die Drehfestigkeit der einzelnen Teile zueinander ist gewährleistet, dass während des Ausknickens der Knickarme sich diese nicht oder nur geringfügig tordieren. Dadurch ist ein symmetrisches Ausknickverhalten der Knickarme gewährleistet.

In einer weiteren vorteilhaften Ausgestaltung der Erfindung weist die Hülse am vorderen und/oder am hinteren Ende des Spreizdübels einen Bund auf, welcher die Knickarme am vorderen und/oder am hinteren Ende miteinander verbindet. Bevorzugt ist am vorderen und am hinteren Ende der Hülse jeweils ein umlaufender Bund angeordnet, wobei die Bünde insbesondere eine identische Erstreckung in Richtung der Längsachse aufweisen und die Knickarme und die Durchbrechungen insbesondere symmetrisch zwischen den Metallbünden angeordnet sind. Der Bund, respektive die Bünde sorgen für eine ausreichend stabile Anbindung der Knickarme an die Hülse.

Es hat sich als besonders vorteilhaft erwiesen, dass die Knickarme jeweils eine identische Breite aufweisen. Unter "Breite" ist hierbei die Breite, respektive die Erstreckung des jeweiligen Knickarms in Umfangsrichtung der Hülse zu verstehen. Dadurch ist ein identisches Knickverhalten der einzelnen Knickarme im Knickbereich gewährleistet oder zumindest unterstützt. Ebenso hat es sich als vorteilhaft erweisen, dass auch die Durchbrechungen jeweils eine identische Breite aufweisen. Auch hier ist unter "Breite" die Erstreckung einer jeweiligen Unterbrechung in Umfangsrichtung gemeint. Insbesondere sind die Breiten der Knickarme und die Breiten der Durchbrechungen identisch. Dadurch ist das Ausknickverhalten der einzelnen Knickarme weiter optimiert.

In einer weiteren vorteilhaften Ausgestaltung der Erfindung entspricht eine Breite des/der Knickarms/Knickarme in Umfangsrichtung, dem 2- bis 4-fachen der Dicke des/der Knickarms/Knickarme in radialer Richtung. Dadurch, dass die Dicke des/der Knickarms/Knickarme also deutlich geringer ist als deren Breite, ist das Ausknickverhalten der Knickarme dahingehend weiter optimiert, dass die Knickarme leicht ausknicken, aber dennoch eine große Anlagefläche bilden. Die erfindungsgemäßen Dicken der Knickarme ergaben das beste Knickverhalten hinsichtlich einem homogenen "Initialknicken" und einem tordierfreien Verhalten während des Knickens. Zudem ist die Kraft, die für die Bewegung des Widerlagerelements in Richtung des hinteren Endes aufgewendet werden muss, für die genannten Dicken gering.

Der Kern weist ein oder mehrere Spreizelemente auf, die durch das axiale Komprimieren des Kerns derart verformt werden, dass sie an der einen oder den mehreren Stellen im Knickbereich radial bezüglich der Längsachse nach außen gegen die Knickarme drücken. Insbesondere sind die mehreren Spreizelemente äquidistant zueinander entlang der Längsachse angeordnet. Beispielsweise kann der Kern die Form eines Balgs aufweisen. Auch ist es möglich, dass der Kern ein oder mehrere entlang der Längsachse angeordnete Ringe aufweist, die bei der Kompression des Kerns ebenfalls komprimiert und dadurch nach außen gedrückt werden. Der oder die Ringe können hierbei aus dem gleichen Material wie der Kern bestehen, jedoch auch vom Material des Kerns verschieden sein. Insbesondere bestehen die Ringe aus dem gleichen Kunststoff, wenn der Kern und die Ringe einstückig gespritzt sind. Jedoch ist es auch möglich, durch ein 2K-Spritzgießverfahren die Ringe oder generell die Spreizelemente aus einem anderen Kunststoff als den Kern herzustellen, respektive an diesen anzuspritzen. Die Aufzählung der Spreizelemente ist beispielhaft und nicht abschließend. Die Verwendung weiterer Spreizelemente, die in der Lage sind, bei axialer Kompression des Kerns radial zu expandieren, ist möglich.

In einer weiteren vorteilhaften Ausgestaltung der Erfindung ist der Kern zumindest im Knickbereich, also im Bereich der Längserstreckung der Knickarme und der Durchbrechungen, durch einzelne miteinander verbundene, insbesondere elliptische, Ringsegmente gebildet, deren Hauptachsen zur Längsachse geneigt sind. Die Ringsegmente bilden hierbei die Spreizelemente. Jeweils zwei miteinander verbundene Ringsegmente schneiden sich derart, dass sie hierbei orthogonal zur Längsachse gesehen eine X-förmige Gestalt aufweisen. Jeweils zwei miteinander verbundene Ringsegmente bilden eine gemeinsame X-förmige Spreizeinheit. Bei einer insbesondere elliptischen Ausgestaltung der Ringe sind diese derart entlang der Längsachse angeordnet, dass die Hauptscheitelpunkte der elliptischen Ringe jeweils die äußeren Enden des "X" bilden. Insbesondere erstreckt sich eine Vielzahl derartiger Spreizeinheiten entlang der Längsachse. Insbesondere erstrecken sich derart viele Spreizeinheiten entlang der Längsachse, dass der komplette Knickbereich mit diesen Spreizeinheiten ausgefüllt ist. Jedes der Ringsegmente weist eine Ringöffnung auf, wobei die Ringöffnungen gemeinschaftlich den Schraubkanal des Kerns bilden. An den Stellen, insbesondere an den Hauptscheitelpunkten, an denen die einzelnen X-förmigen Spreizeinheiten miteinander verbunden, insbesondere aneinander angespritzt sind, bilden jeweils zwei benachbarte Spreizeinheiten an den Verbindungsstellen vordefinierte, insbesondere punkt- oder linienförmige Spreizzonen. Die Spreizzonen sind bezüglich der Längsachse insbesondere spiegelsymmetrisch und weisen entlang der Längsachse insbesondere äquidistante Abstände zu benachbarten Spreizzonen auf.

Die X-förmigen Spreizeinheiten erfüllen eine Doppelfunktion: Zum einen wirken die X-förmigen Spreizeinheiten als eine Art Feder. Der Benutzer des erfindungsgemäßen Spreizdübels verspürt beim Bewegen des Widerlagerelements in Richtung des hinteren Endes des Spreizdübels durch das Eindrehen einer Schraube eine Zunahme des zum Einschrauben notwendigen Drehmoments, da die X-förmigen Spreizeinheiten entlang der Längsachse insbesondere elastisch zusammengedrückt werden. Die Zunahme des Drehmoments steigt hierbei mit dem Weg, den das Widerlagerelement in Richtung des hinteren Endes des Spreizdübels zurücklegt. Dadurch verspürt der Benutzer eine vertraute haptische Rückmeldung während des Einschraubens der Schraube. Diese entspricht im Wesentlichen beispielsweise dem Einschrauben einer Holzschraube in einen Holzuntergrund, wo auch das aufzubringende Drehmoment immer weiter ansteigt. Zum anderen erfolgt durch die Bewegung des Widerlagerelements ein radiales Aufspreizen der Spreizzonen. Anders formuliert bewegen sich die Verbindungsstellen radial nach außen. An den Stellen, an denen sich die Verbindungsstellen, respektive die Spreizzonen radial nach außen bewegen, wird ein Ausknicken der Knickarme initiiert oder zumindest ermöglicht, vorausgesetzt, der Spreizdübel kann an diesen Stellen frei ausknicken und ist nicht von einem Bohrloch umgeben. Es können auch mehrere Spreizzonen gemeinschaftlich zu einem Ausknicken der Knickarme im Knickbereich beitragen.

In einer weiteren erfindungsgemäßen Ausgestaltung sind die einzelnen Ringsegmente identisch ausgestaltet. Hierdurch sind die eben beschriebenen Funktionen der Ringsegmente beziehungsweise der dadurch gebildeten Spreizeinheiten optimiert.

Um die Druckstabilität des Kerns entlang der Längsachse zu erhöhen, beziehungsweise um die Kraft, die der Benutzer bei der Bewegung des Widerlagerelements aufwenden muss, anzupassen, sind in einer weiteren erfindungsgemäßen Ausgestaltung des Spreizdübels die einzelnen Ringsegmente durch in axialer Richtung verlaufende Sollknickstreben miteinander verbunden. Die Sollknickstreben sind außerhalb oder angrenzend an den Schraubkanal angeordnet. Insbesondere erstrecken sich insbesondere vier Sollknickstreben, die bezüglich zur Längsachse jeweils um 90° zueinander versetzt sind, zwischen den einzelnen Ringsegmenten. Insbesondere erstreckt sich jede der Sollknickstreben parallel zur Längsachse. Die einzelnen Sollknickstreben können jedoch auch einen Winkel zur Längsachse einschließen. Die Sollknickstreben verhindern ein unbeabsichtigtes "Zusammenfedern" der X-förmigen Spreizeinheiten. Wird das Widerlagerelement in Richtung des hinteren Endes bewegt, beginnen die Sollknickstreben zu brechen oder sich zumindest zu verbiegen, respektive zu knicken. Die Sollknickstreben sorgen also dafür, dass zumindest eine vorbestimmte Kraft aufgewendet werden muss, um die einzelnen X-förmigen Spreizeinheiten entlang der Längsachse zusammendrücken zu können. Durch die Ausgestaltung der Sollknickstreben, also insbesondere durch die Anpassung deren Dicke, kann die vorbestimmte Kraft eingestellt werden.

Um eine möglichst einfache Montage des Spreizdübels zu ermöglichen, sind in einer weiteren vorteilhaften Ausgestaltung der Erfindung am vorderen Ende des Spreizdübels das Widerlagerelement mit der Hülse und am hinteren Ende des Spreizdübels der Kern mit der Hülse durch eine Rastverbindung verbunden. Insbesondere greifen zwei bezüglich der Längsachse spiegelsymmetrische und sich in Richtung der Längsachse erstreckende Zapfen am Widerlagerelement in jeweils korrespondierende Nuten in der Hülse ein. Die Zapfen können auch an der Hülse und die Nuten entsprechend an dem Widerlagerelement angeordnet sein. Insbesondere sind die Nuten in dem Bund eingebracht, der am vorderen Ende angeordnet ist. Insbesondere weist der Bund des Kerns am hinteren Ende ebenfalls zwei bezüglich der Längsachse spiegelsymmetrische und sich in Richtung der Längsachse erstreckende Zapfen auf. Diese sind insbesondere identisch zu den Zapfen am Widerlagerelement. Die Zapfen am Bund greifen insbesondere in korrespondierende Nuten im Bund am hinteren Ende ein. Insbesondere sind die Nuten und die Zapfen identisch ausgestaltet und sind parallel zur Längsachse orientiert. Die identische Ausgestaltung der Nuten und der Zapfen bietet eine gewisse Flexibilität bei der Montage des Spreizdübels, da es in diesem Fall keine Rolle spielt, welche Öffnung der Hülse mit dem Widerlager und welche Öffnung mit dem Bund des Kerns verbunden wird.

Um eine Verdrehsicherung des Kerns, des Widerlagerelements und der Hülse zueinander weiter zu verbessern, ist in einer weiteren vorteilhaften Ausgestaltung der Erfindung zwischen einem vorderen Ende des Kerns und einem hinteren Ende des Widerlagerelements eine Verdrehsicherung ausgebildet. Das vordere Ende des Kerns ist hierbei der Öffnung des Schraubkanals abgewandt. Das hintere Ende des Widerlagerelements tritt mit dem vorderen Ende des Kerns insbesondere formschlüssig in Kontakt. Auch eine reibschlüssige Verbindung ist möglich.

Bevorzugt ist der erfindungsgemäße Spreizdübel zur Verwendung mit einer metrischen Schraube vorgesehen. Daher weist in einer weiteren bevorzugten Ausgestaltung das Widerlagerelement ein sich in Längsrichtung erstreckendes Innengewinde auf. Das Innengewinde ist hierbei auf die zu verwendende metrische Schraube abgestimmt.

Um zu verhindern, dass beim Einbringen, genauer formuliert beim Einstecken der Schraube in den Schraubkanal die Schraube direkt auf das Widerlagerelement trifft, was zu einem Herausdrücken des Widerlagerelements aus der Hülse führen könnte, weist der Kern an seinem vorderen Ende eine Einstecksperre für die Schraube auf. Die Einstecksperre verengt am vorderen Ende des Kerns den Schraubkanal derart, dass die zu verwendende Schraube nicht über die Einstecksperre hinweg in das Widerlagerelement eingesteckt werden kann. Die Schraube muss gedreht werden, um die Einstecksperre überwinden zu können, um ins Widerlagerelement zu gelangen. Insbesondere korrespondiert die Einstecksperre mit einem Gewinde der zu verwendenden Schraube.

Am hinteren Ende des Spreizdübels, genauer formuliert am hinteren Ende des Kerns, ist eine Mitdrehsicherung angeordnet, die verhindert, dass sich der Spreizdübel, nachdem dieser in den Befestigungsgrund eingebracht wurde, während des Eindrehens der Schraube in den Schraubkanal, respektive des Widerlagerelements, mit der Schraube mitdreht. Insbesondere ist die Mitdrehsicherung durch sich in Richtung der Längsachse erstreckende Schneiden ausgestaltet. Insbesondere sind die Schneiden zueinander jeweils um 90° versetzt auf dem Kunststoffbund angeordnet.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels erklärt.

Es zeigen:
- Figur 1: einen erfindungsgemäßen Spreizdübel in einer perspektivischen Ansicht;
- Figur 2: den erfindungsgemäßen Spreizdübel der Figur 1 in einer Seitenansicht;
- Figur 3: einen Teil des in Figur 2 in Seitenansicht dargestellten Spreizdübels;
- Figur 4: eine Schnittdarstellung eines vorderen Teils IV des in Figur 3 in Seitenansicht dargestellten Spreizdübels; und
- Figur 5: den erfindungsgemäßen Spreizdübel der Figuren 1 und 2 in einem Einbauzustand.

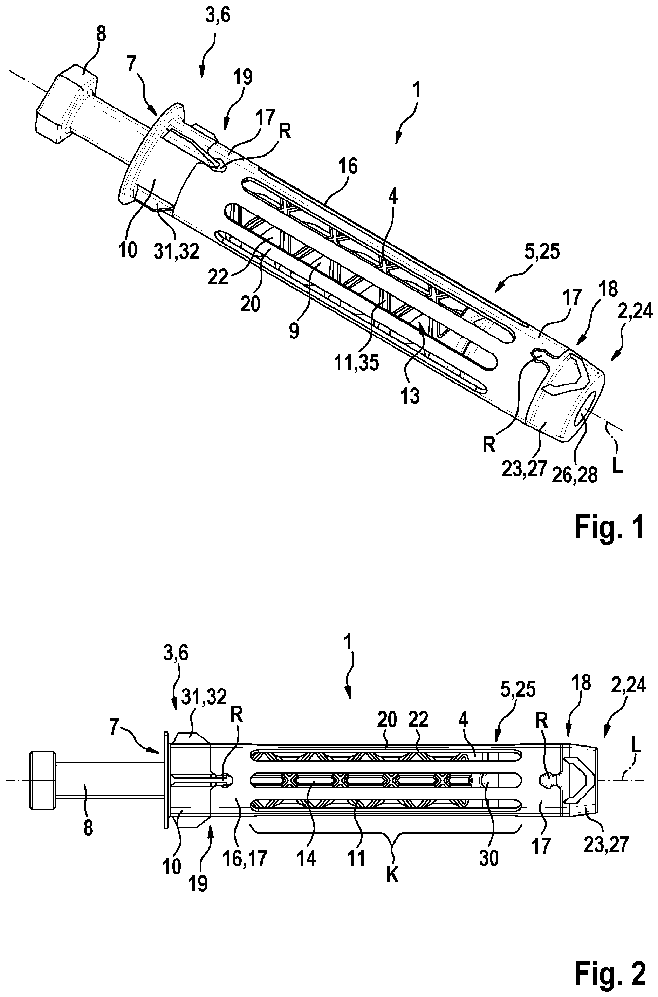

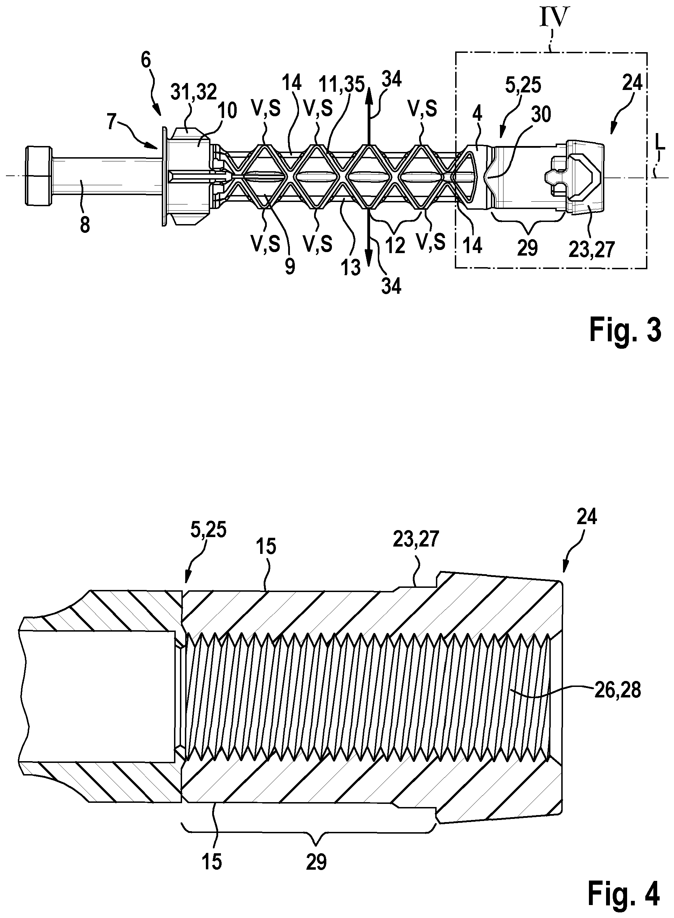

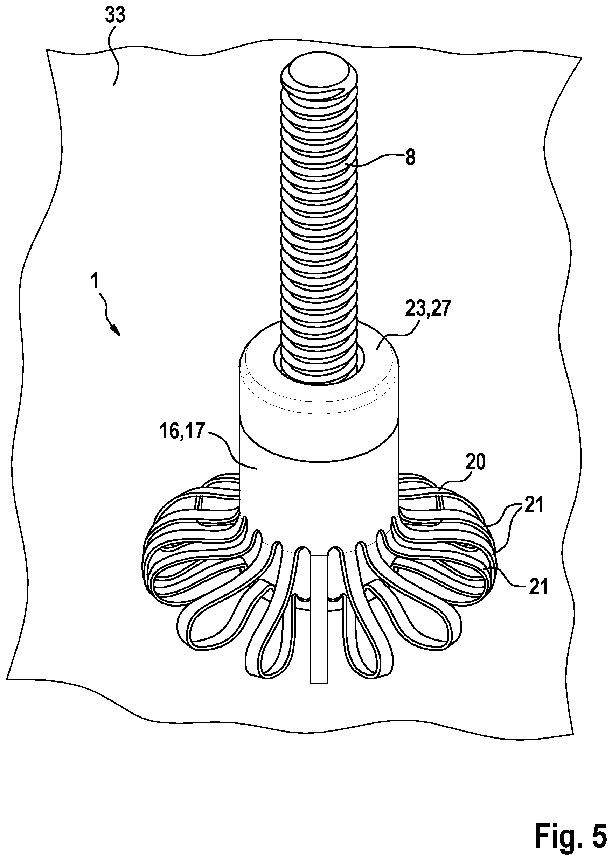

In den Figuren 1 und 2 ist ein erfindungsgemäßer Spreizdübel 1 in perspektivischer und in einer Seitenansicht dargestellt. Die Figuren 3 und 4 zeigen Teile des erfindungsgemäßen Spreizdübels 1, wohingegen in Figur 5 der erfindungsgemäße Spreizdübel 1 in einem eingebauten Zustand in einer Gipskartonplatte 33 dargestellt ist. Aus Gründen der Übersichtlichkeit sind nicht alle Bezugszeichen in allen der Figuren enthalten. Die Bezugszeichen wurden dort eingefügt, wo sie zum Verständnis der Funktion sinnvoll und notwendig sind.

Der erfindungsgemäße Spreizdübel 1 erstreckt sich entlang einer Längsachse L zwischen einem vorderen Ende 2 und einem hinteren Ende 3. Der Spreizdübel 1 weist einen Kern 4 aus Kunststoff auf, welcher in Figur 3 im Detail dargestellt ist. Der Kern 4 erstreckt sich ebenfalls entlang der Längsachse L zwischen einem vorderen Ende 5 und einem hinteren Ende 6. Das vordere Ende 5 des Kerns 4 ist in Richtung des vorderen Endes 2 des Spreizdübels 1 orientiert und das hintere Ende 6 des Kerns 4 korrespondiert mit dem hinteren Ende 3 des Spreizdübels 1. Der Kern 4 weist an seinem hinteren Ende 6, respektive am hinteren Ende 3 des Spreizdübels 1 eine kreisrunde Öffnung 7 auf, durch welche eine metrische Schraube 8 in einen Schraubkanal 9 des Kerns 4 eingebracht werden kann. Der Schraubkanal 9 durchdringt den Kern 4 entlang der Längsachse L vollständig. Der Kern 4 weist zusätzlich am hinteren Ende 3 des Spreizdübels 1 einen umlaufenden Bund 10 auf. Einzelne elliptische Ringsegmente 11 sind entlang der Längsachse L angeordnet. Jeweils zwei der Ringsegmente 11 bilden gemeinsam eine Spreizeinheit 12 mit einer X-förmigen Gestalt. Die elliptischen Ringsegmente 11 sind derart entlang der Längsachse L angeordnet, dass die Hauptscheitelpunkte der elliptischen Ringe 11 jeweils die Enden des "X" bilden. Die Hauptachsen der elliptischen Ringe 11 sind jeweils zur Längsachse L geneigt. An den Hauptscheitelpunkten sind die einzelnen Ringsegmente 11 aneinander angespritzt und weisen dort jeweils eine Verbindungsstelle V auf. Benachbarte Verbindungsstellen V weisen entlang der Längsachse L äquidistante Abstände zueinander auf und sind bezüglich der Längsachse L spiegelsymmetrisch. Jede der Verbindungsstellen V bildet zusätzlich eine Spreizzone S aus. Auf die Funktion der Spreizzone S wird im Folgenden noch genauer eingegangen. Jedes der Ringsegmente 11 weist eine Ringöffnung 13 auf, welche gemeinschaftlich den Schraubkanal 9 für die metrische Schraube 8 bilden. Vier Sollknickstreben 14, welche sich entlang der Längsachse L erstrecken und bezüglich der Längsachse L in Umfangsrichtung um jeweils 90° zueinander versetzt angeordnet sind, verbinden die einzelnen Ringsegmente 11 miteinander. Die Sollknickstreben 14 grenzen an den Schraubkanal 9 an und verbinden jeweils die Hauptscheitelpunkte und die Nebenscheitelpunkte der Ringsegmente 11. Am vorderen Ende 5 des Kerns 4 ist eine Einstecksperre 15 angeordnet. Die Einstecksperre 15 verengt den Schraubkanal 9 am vorderen Ende 5 des Kerns 4 derart, dass die Schraube 8 nicht über die Einstecksperre 15 geschoben werden kann. Zur Überwindung der Einstecksperre 15 ist die Schraube 8 im Schraubkanal 9 zu drehen. Die Einstecksperre 15 korrespondiert mit dem Gewinde der einzuschraubenden Schraube 8.

Eine Hülse 16 aus einem Metallblech ist auf dem Kern 4 angeordnet und ummantelt diesen. Die Hülse 16 erstreckt sich zwischen einem vorderen Ende 18 und einem hinteren Ende 19. Das vordere Ende 18 der Hülse 16 ist dabei in Richtung des vorderen Endes 2 des Spreizdübels 1 orientiert. Das hintere Ende 19 der Hülse ist in Richtung des hinteren Endes 3 des Spreizdübels 1 orientiert. Die Hülse 16 weist an ihrem vorderen Ende 18, respektive am vorderen Ende 2 des Spreizdübels 1 einen umlaufenden Bund 17 auf. Ein solcher Bund 17 ist ebenfalls am hinteren Ende 19 angeordnet. Die beiden Bunde 17 sind identisch ausgeführt. Der Kern 4 und die Hülse 16 sind koaxial bezüglich der Längsachse L angeordnet. Ein Außendurchmesser des Kerns 4 ist hierbei auf einen Innendurchmesser der Hülse 16 derart abgestimmt, dass die Hülse 16 in Längsrichtung auf den Kern 4 aufgeschoben werden kann, bis die Hülse 16 in Kontakt zu dem Bund 10 des Kerns 4 tritt. Zwischen den beiden Bunden 17 sind sich in Längsrichtung erstreckende Knickarme 20 und Durchbrechungen 22 ausgebildet. Die Knickarme 20 und die Durchbrechungen 22 sind alternierend zueinander angeordnet und weisen jeweils identische Breiten in Umfangsrichtung des Spreizdübels 1 auf. Durch die Länge der Knickarme 20 ist ein Knickbereich K des Spreizdübels 1 definiert. In diesem Knickbereich K können die Knickarme 20 Knickpunkte 21 ausbilden, auf deren Entstehung im Folgenden noch eingegangen wird.

Am vorderen Ende 2 des Spreizdübels 1 ist ein Widerlagerelement 23 angeordnet. Das Widerlagerelement 23 erstreckt sich zwischen einem vorderen Ende 24 und einem hinteren Ende 25. Eine Durchgangsöffnung 26 erstreckt sich entlang der Längsachse L durch das Widerlagerelement 23 hindurch. Das Widerlagerelement 23 ist als eine Buchse 27 ausgestaltet, die ein Innengewinde 28 aufweist. Das Innengewinde 28 ist auf das Gewinde der Schraube 8 abgestimmt. Die Schraube 8 ist in den Schraubkanal 9 und in das Widerlagerelement 23 einschraubbar. Hierbei muss durch die Eindrehbewegung der Schraube 8 die Einstecksperre 15 überwunden werden. Die Buchse 27 weist an ihrem hinteren Ende 25 einen Einsteckbereich 29 auf. Dieser ist in der Figur 3 ersichtlich. Der Einsteckbereich 29 ist in das vordere Ende 18 der Hülse 16 eingesteckt. Das hintere Ende 25 des Widerlagerelements 23, respektive der Buchse 27, tritt in Kontakt zu dem vorderen Ende 5 des Kerns 4. An dem Kontaktbereich ist eine formschlüssige Verdrehsicherung 30 gebildet, die dazu beiträgt, dass, im montierten Zustand des Spreizdübels 1, wie er in Figur 1 dargestellt ist, der Kern 4 zum Widerlagerelement 23 drehfest ist. Zwei Rastverbindungen R fixieren den Spreizdübel 1 in dem in der Figur 1 dargestellten Zustand. Eine Rastverbindung R ist zwischen dem Widerlagerelement 23 und dem vorderen Ende 18 der Hülse 16 gebildet. Die weitere Rastverbindung R ist zwischen dem hinteren Ende 19 der Hülse 16 und dem Bund 10 des Kerns 4 ausgebildet. Die Rastverbindungen R sind dadurch gebildet, dass, wie in den Figuren 1 und 2 ersichtlich, Zapfen in korrespondierende Nuten in der Hülse 16 eingreifen. Beide Rastverbindungen R sind identisch ausgebildet. Durch die Rastverbindungen R ist der Spreizdübel 1 durch Zusammenstecken montierbar. Die Rastverbindungen R sorgen dafür, dass der Kern 4, die Hülse 16 und das Widerlagerelement 23 zueinander drehfest sind. Am hinteren Ende 3 des Spreizdübels 1 ist eine Mitdrehsicherung 31 in Form von Schneiden 32 angeordnet, die dafür sorgen, dass sich der Spreizdübel 1 im Befestigungsgrund nicht mit der Schraube 8 mit dreht (nicht dargestellt).

Die Funktion des erfindungsgemäßen Spreizdübels 1 wird im Folgenden erklärt: Der Spreizdübel 1 wird in einem ersten Schritt in ein vorgefertigtes Bohrloch in einem Befestigungsgrund, beispielsweise einer Gipskartonplatte 33, dargestellt in Figur 5, eingebracht. Das Bohrloch ist ein Durchgangsloch, es durchdringt die Gipskartonplatte vollständig. Die Gipskartonplatte 33 ist hierbei deutlich schmaler als die Länge des Spreizdübels 1, genauer formuliert als die Erstreckung des Knickbereichs K in Längsrichtung. Der Spreizdübel 1 wird soweit in das Bohrloch eingebracht, dass die Schneiden 32 in die Bohrlochwandung einschneiden und das hintere Ende 3 des Spreizdübels 1 plan mit einer Oberfläche der vorderen Seite der Gipskartonplatte 33 ist. Diese vordere Seite der Gipskartonplatte 33 ist einer hinteren Seite der Gipskartonplatte 33 aus Figur 5 abgewandt und folglich in Figur 5 nicht sichtbar. Durch das Eindrehen der Schraube 8 in das Widerlagerelement 23 wird das Widerlagerelement 23 in Richtung des hinteren Endes 3 des Spreizdübels 1 bewegt. Durch diese Bewegung wird der Kern 4 komprimiert. Die den Kern 4 stabilisierenden Sollknickstreben 14 werden hierbei gebrochen. Die X-förmig angeordneten Ringsegmente 11, respektive die aus den Ringsegmenten 11 gebildeten X-förmigen Spreizeinheiten 12, werden entlang der Längsachse L elastisch komprimiert, wodurch sich der Kern 4 verkürzt und im Durchmesser um etwa 20% vergrößert. Durch das Komprimieren der Spreizeinheiten 12 spreizen diesen an den Verbindungsstellen V radial nach außen (dargestellt durch die Pfeile der Spreizrichtung 34 in Figur 3). Die an den Verbindungsstellen V gebildeten Spreizzonen S drücken gegen die Innenseiten der Knickarme 20. An den freien Stellen des Knickbereichs K, also an den Stellen, an denen der Knickbereich K nicht von der Bohrlochwandung umschlossen ist, werden die Knickarme 20 an den Spreizzonen S radial nach außen gedrängt, was das Ausknicken der Knickarme 20 in diesen Stellen des Knickbereichs K initiiert. Nach dem Initiieren des Knickens nimmt ein Abstand zwischen den Knickarmen 20 und dem Kern 4 zu. Die Knickarme 20 knicken folglich aus und bilden Knickpunkte 21, dargestellt in Figur 5. Hierdurch nehmen die Knickarme 20 nach dem Ausknicken die Gestalt eines Kniehebels an. Das Ausknicken der Knickarme 20 ist dann beendet, wenn sich die Knickarme 20 an die in Figur 5 sichtbare Seite der Gipskartonplatte 33 angelegt haben und kein weiteres Verkürzen des Kerns 4 mehr möglich ist. Der erfindungsgemäße Spreizdübel 1 bildet also abhängig von der Dicke der Gipskartonplatte 33 die Knickpunkte 21 selbst, an denen die Knickarme 20 ausknicken. Somit sind voreingebrachte "Sollknickstellen" in der Hülse 16 und/oder in dem Kern 4 nicht notwendig.

### Bezugszeichenliste

- 1: Spreizdübel
- 2: vorderes Ende des Spreizdübels 1
- 3: hinteres Ende des Spreizdübels 1
- 4: Kern
- 5: vorderes Ende des Kerns 4
- 6: hinteres Ende des Kerns 4
- 7: Öffnung
- 8: Schraube
- 9: Schraubkanal
- 10: Bund des Kerns 4
- 11: Ringsegment
- 12: Spreizeinheit
- 13: Ringöffnung
- 14: Sollknickstrebe
- 15: Einstecksperre
- 16: Hülse
- 17: Bund
- 18: vorderes Ende der Hülse 16
- 19: hinteres Ende der Hülse 16
- 20: Knickarm
- 21: Knickpunkte
- 22: Durchbrechung
- 23: Widerlagerelement
- 24: vorderes Ende des Widerlagerelements 23 bzw. der Buchse 27
- 25: hinteres Ende des Widerlagerelements 23 bzw. der Buchse 27
- 26: Durchgangsöffnung des Widerlagerelements 23
- 27: Buchse
- 28: Innengewinde
- 29: Einsteckbereich der Buchse 27
- 30: Verdrehsicherung
- 31: Mitdrehsicherung
- 32: Schneide
- 33: Gipskartonplatte
- 34: Spreizrichtung
- 35: Spreizelement
- L: Längsachse
- V: Verbindungsstelle
- S: Spreizzone
- R: Rastverbindung
- K: Knickbereich

## Patentansprüche

1. Spreizdübel (1) der sich entlang einer Längsachse (L) zwischen einem vorderen Ende (2) und einem hinteren Ende (3) erstreckt, aufweisend:
- einen in Richtung der Längsachse (L) axial komprimierbaren Kern (4), wobei der Kern (4) einen Schraubkanal (9) zum Einführen einer Schraube (8) umfasst, wobei der Schraubkanal (9) am hinteren Ende (3) des Spreizdübels (1) eine Öffnung (7) aufweist,
- eine um den Kern (4) angeordnete äußere Hülse (16), wobei die Hülse (16) in einem Knickbereich (K) sich insbesondere in Längsrichtung erstreckende Knickarme (20), die von sich insbesondere in Längsrichtung erstreckenden Durchbrechungen (22) in der Hülse (16) getrennt sind, aufweist,
- ein Widerlagerelement (23) zum Eindrehen einer Schraube (8) am vorderen Ende (2) des Spreizdübels (1), wobei durch Eindrehen einer in den Schraubkanal (9) eingeführten Schraube (8) in das Widerlagerelement (23), das Widerlagerelement (23) in Richtung des hinteren Endes (3) des Spreizdübels (1) axial bewegbar ist,
- wobei durch die Bewegung des Widerlagerelements (23) in Richtung des hinteren Endes (3) des Spreizdübels (1) der Kern (4) derart komprimierbar ist, dass der Kern (4) zumindest punktuell im Knickbereich (K) an einer oder mehreren Stellen (V, S) radial bezüglich der Längsachse (L) von innen gegen die Knickarme (20) gedrückt wird, wodurch ein definiertes kniehebelartiges Ausknicken der Knickarme (20) initiiert wird.

2. Spreizdübel (1) nach Anspruch 1, **dadurch gekennzeichnet, dass** der Kern (4) ein oder mehrere Spreizelemente (35) aufweist, die durch das axiale Komprimieren des Kerns (4) derart verformt werden, dass sie an der einen oder den mehreren Stellen (V, S) radial bezüglich der Längsachse (L) nach außen gegen die Knickarme (20) drücken.

3. Spreizdübel (1) nach Anspruch 1 oder 2, **dadurch gekennzeichnet, dass** der Kern (4), die Hülse (16) und das Widerlagerelement (23) zueinander drehfest sind.

4. Spreizdübel (1) nach einem der Ansprüche 1 bis 3, **dadurch gekennzeichnet, dass** am vorderen Ende (2) und/oder am hinteren Ende (3) des Spreizdübels (1) die Hülse (16) jeweils einen Bund (17) aufweist, welche die Knickarme (20) am vorderen Ende (2) und/oder am hinteren Ende (3) des Spreizdübels (1) miteinander verbindet.

5. Spreizdübel (1) nach einem der Ansprüche 1 bis 4, **dadurch gekennzeichnet, dass** die Knickarme (20) jeweils eine identische Breite aufweisen.

6. Spreizdübel (1) nach einem der Ansprüche 1 bis 5, **dadurch gekennzeichnet, dass** die Durchbrechungen (22) jeweils eine identische Breite aufweisen.

7. Spreizdübel (1) nach einem der vorhergehenden Ansprüche, **dadurch gekennzeichnet, dass** eine Breite eines Knickarms (20) in Umfangsrichtung dem 2- bis 4-fachen der Dicke des Knickarms (20) in radialer Richtung entspricht.

8. Spreizdübel (1) nach einem der vorhergehenden Ansprüche, **dadurch gekennzeichnet, dass** der Kern (4) zumindest im Knickbereich (K) durch einzelne miteinander verbundene, insbesondere elliptische, Ringsegmente (11) gebildet ist, wobei jeweils zwei miteinander verbundene Ringsegmente (11) orthogonal zur Längsachse (L) gesehen eine X-förmige Gestalt aufweisen.

9. Spreizdübel (1) nach Anspruch 8, **dadurch gekennzeichnet, dass** die einzelnen Ringsegmente (11) identisch ausgestaltet sind.

10. Spreizdübel (1) nach Anspruch 8 oder 9, **dadurch gekennzeichnet, dass** die einzelnen Ringsegmente (11) durch in axialer Richtung verlaufende Sollknickstreben (14) miteinander verbunden sind.

11. Spreizdübel (1) nach einem der Ansprüche 3 bis 10, **dadurch gekennzeichnet, dass** am vorderen Ende (2) des Spreizdübels (1) das Widerlagerelement (23) mit der Hülse (16) und am hinteren Ende (3) des Spreizdübels (1) der Kern (4) mit der Hülse (16) durch eine Rastverbindung verbunden sind.

12. Spreizdübel (1) nach einem der vorhergehenden Ansprüche, **dadurch gekennzeichnet, dass** zwischen einem vorderen Ende (5) des Kerns (4) und einem hinteren Ende (25) des Widerlagerelements (23) eine Verdrehsicherung (30) ausgebildet ist.

13. Spreizdübel (1) nach einem der vorhergehenden Ansprüche, **dadurch gekennzeichnet, dass** das Widerlagerelement (23) ein sich in Längsrichtung erstreckendes Innengewinde (28) aufweist.

14. Spreizdübel (1) nach einem der vorhergehenden Ansprüche, **dadurch gekennzeichnet, dass** der Kern (4) an seinem vorderen Ende (5) eine Einstecksperre (15) für eine Schraube (8) aufweist.

15. Spreizdübel (1) nach einem der vorhergehenden Ansprüche, **dadurch gekennzeichnet, dass** der Kern (4) am hinteren Ende (3) des Spreizdübels (1) eine Mitdrehsicherung (31) aufweist.

## Claims

1. Expansion anchor (1) which extends along a longitudinal axis (L) between a front end (2) and a rear end (3), comprising
- a core (4) axially compressible in the direction of the longitudinal axis (L), wherein the core (4) comprises a screw channel (9) for inserting a screw (8), wherein the screw channel (9) has an opening (7) at the rear end (3) of the expansion anchor (1),
- an outer sleeve (16) arranged around the core (4), the sleeve (16) having buckling arms (20) extending in particular in the longitudinal direction in a buckling region (K), which are separated from perforations (22) in the sleeve (16) extending in particular in the longitudinal direction
- an abutment element (23) for screwing in a screw (8) at the front end (2) of the expansion anchor (1), wherein by screwing a screw (8) inserted into the screw channel (9) into the abutment element (23), the abutment element (23) is axially movable in the direction of the rear end (3) of the expansion anchor (1),
- wherein the core (4) can be compressed by the movement of the abutment element (23) in the direction of the rear end (3) of the expansion anchor (1) in such a way that the core (4) is pressed at least selectively in the buckling region (K) at one or more points (V, S) radially with respect to the longitudinal axis (L) from the inside against the buckling arms (20), whereby a defined toggle lever-like buckling of the buckling arms (20) is initiated.

2. Expansion anchor (1) according to claim 1, **characterised in that** the core (4) has one or more spreading elements (35) which are deformed by the axial compression of the core (4) in such a way that they press radially outwards against the buckling arms (20) at one or more points (V, S) with respect to the longitudinal axis (L).

3. Expansion anchor (1) according to claim 1 or 2, **characterised in that** the core (4), the sleeve (16) and the abutment element (23) are rotationally fixed relative to one another.

4. Expansion anchor (1) according to one of claims 1 to 3, **characterised in that** at the front end (2) and/or at the rear end (3) of the expansion anchor (1), the sleeve (16) has a collar (17) in each case, which connects the buckling arms (20) at the front end (2) and/or at the rear end (3) of the expansion anchor (1) to one another.

5. Expansion anchor (1) according to one of claims 1 to 4, **characterised in that** the buckling arms (20) each have an identical width.

6. Expansion anchor (1) according to one of claims 1 to 5, **characterised in that** the perforations (22) each have an identical width.

7. Expansion anchor (1) according to one of the preceding claims, **characterised in that** a width of a buckling arm (20) in the circumferential direction corresponds to 2 to 4 times the thickness of the buckling arm (20) in the radial direction.

8. Expansion anchor (1) according to one of the preceding claims, **characterised in that** the core (4) is formed, at least in the buckling region (K), by individual interconnected, in particular elliptical, ring segments (11), two interconnected ring segments (11) in each case having an X-shaped configuration when viewed orthogonally to the longitudinal axis (L).

9. Expansion anchor (1) according to claim 8, **characterised in that** the individual ring segments (11) are of identical design.

10. Expansion anchor (1) according to claim 8 or 9, **characterised in that** the individual ring segments (11) are connected to one another by predetermined buckling struts (14) extending in the axial direction.

11. Expansion anchor (1) according to one of claims 3 to 10, **characterised in that** at the front end (2) of the expansion anchor (1) the abutment element (23) is connected to the sleeve (16) and at the rear end (3) of the expansion anchor (1) the core (4) is connected to the sleeve (16) by a snap-in connection.

12. Expansion anchor (1) according to one of the preceding claims, **characterised in that** an anti-rotation device (30) is formed between a front end (5) of the core (4) and a rear end (25) of the abutment element (23).

13. Expansion anchor (1) according to one of the preceding claims, **characterised in that** the abutment element (23) has an internal thread (28) extending in the longitudinal direction.

14. Expansion anchor (1) according to one of the preceding claims, **characterised in that** the core (4) has an insertion lock (15) for a screw (8) at its front end (5).

15. Expansion anchor (1) according to one of the preceding claims, **characterised in that** the core (4) has a locking device (31) at the rear end (3) of the expansion anchor (1).

## Revendications

1. Cheville à expansion (1) qui s'étend le long d'un axe longitudinal (L) entre une extrémité avant (2) et une extrémité arrière (3), comprenant :
- un noyau (4) compressible axialement dans la direction de l'axe longitudinal (L), le noyau (4) comprenant un canal de vissage (9) pour l'introduction d'une vis (8), le canal de vissage (9) présentant une ouverture (7) à l'extrémité arrière (3) de la cheville à expansion (1),
- une douille extérieure (16) disposée autour du noyau (4), dans laquelle la douille (16) présente, dans une zone de flambage (K), des bras de flambage (20) s'étendant notamment dans le sens longitudinal, qui sont séparés par des éléments de perforation (22) s'étendant notamment dans le sens longitudinal dans la douille (16),
- un élément de butée (23) pour visser une vis (8) à l'extrémité avant (2) de la cheville à expansion (1), dans lequel, en vissant une vis (8) introduite dans le canal de vissage (9) dans l'élément de butée (23), l'élément de butée (23) peut être déplacé axialement en direction de l'extrémité arrière (3) de la cheville à expansion (1),
- dans lequel le mouvement de l'élément de butée (23) en direction de l'extrémité arrière (3) de la cheville à expansion (1) permet de comprimer le noyau (4) de telle sorte que le noyau (4) est pressé de l'intérieur contre les bras de flambage (20) au moins ponctuellement dans la zone de flambage (K) en un ou plusieurs endroits (V, S) radialement par rapport à l'axe longitudinal (L), ce qui initie un flambage défini en forme de levier de genou des bras de flambage (20).

2. Cheville à expansion (1) selon la revendication 1, **caractérisée en ce que** le noyau (4) comprend un ou plusieurs éléments d'écartement (35) qui sont déformés par la compression axiale du noyau (4) de telle sorte qu'ils exercent une pression radiale vers l'extérieur par rapport à l'axe longitudinal (L) contre les bras de flambage (20) en un ou plusieurs endroits (V, S).

3. Cheville à expansion (1) selon la revendication 1 ou 2, **caractérisée en ce que** le noyau (4), la douille (16) et l'élément de butée (23) sont solidaires en rotation les uns des autres.

4. Cheville à expansion (1) selon l'une des revendications 1 à 3, **caractérisée en ce qu'**à l'extrémité avant (2) et/ou à l'extrémité arrière (3) de la cheville à expansion (1), la douille (16) présente respectivement une collerette (17) qui relie entre eux les bras de flambage (20) à l'extrémité avant (2) et/ou à l'extrémité arrière (3) de la cheville à expansion (1).

5. Cheville à expansion (1) selon l'une des revendications 1 à 4, **caractérisée en ce que** les bras de flambage (20) présentent chacun une largeur identique.

6. Cheville à expansion (1) selon l'une des revendications 1 à 5, **caractérisée en ce que** les éléments de perforation (22) présentent chacun une largeur identique.

7. Cheville à expansion (1) selon l'une quelconque des revendications précédentes, **caractérisée en ce qu'**une largeur d'un bras de flambage (20) dans la direction circonférentielle correspond à 2 à 4 fois l'épaisseur du bras de flambage (20) dans la direction radiale.

8. Cheville à expansion (1) selon l'une des revendications précédentes, **caractérisée en ce que** le noyau (4) est formé, au moins dans la zone de flambage (K), par des segments de bague (11) individuels reliés entre eux, en particulier elliptiques, dans lequel deux segments de bague (11) reliés entre eux présentent respectivement une forme en X, vu orthogonalement à l'axe longitudinal (L).

9. Cheville à expansion (1) selon la revendication 8, **caractérisée en ce que** les différents segments de bague (11) sont conçus de manière identique.

10. Cheville à expansion (1) selon la revendication 8 ou 9, **caractérisée en ce que** les différents segments de bague (11) sont reliés entre eux par des entretoises de flambage (14) s'étendant dans la direction axiale.

11. Cheville à expansion (1) selon l'une des revendications 3 à 10, **caractérisée en ce que** , à l'extrémité avant (2) de la cheville à expansion (1), l'élément de butée (23) est relié à la douille (16) et, à l'extrémité arrière (3) de la cheville à expansion (1), le noyau (4) est relié à la douille (16) par une liaison par encliquetage.

12. Cheville à expansion (1) selon l'une des revendications précédentes, **caractérisée en ce qu'**un dispositif anti-rotation (30) est formé entre une extrémité avant (5) du noyau (4) et une extrémité arrière (25) de l'élément de butée (23).

13. Cheville à expansion (1) selon l'une des revendications précédentes, **caractérisée en ce que** l'élément de butée (23) présente un filetage intérieur (28) s'étendant longitudinalement.

14. Cheville à expansion (1) selon l'une des revendications précédentes, **caractérisée en ce que** le noyau (4) comporte à son extrémité avant (5) un blocage d'insertion (15) pour une vis (8).

15. Cheville à expansion (1) selon l'une quelconque des revendications précédentes, **caractérisée en ce que** le noyau (4) présente une sécurité anti-rotation (31) à l'extrémité arrière (3) de la cheville à expansion (1).
